# EUROPEAN PATENT APPLICATION

(11) **EP 3 292 750 A1**
(43) Date of publication of application: **14.03.2018**
(21) Application number: 16835087.4
(22) Date of filing: 05.08.2016
(51) Int. Cl.: A01G 9/00, A01G 1/06, A01G 7/00, A01G 9/14, A01G 9/24

(54) **SAPLING CULTIVATION APPARATUS AND SAPLING CULTIVATION METHOD**

(30) Priority: 10.08.2015 JP 2015157862
(71) Applicant: Mikuni Bio Farm, Sakai-shi, Fukui 913-0003 (JP)
(72) Inventor: YASUKURI, Yoshio, Sakai-shi, Fukui 913-0003 (JP)
(74) Representative: DTS Patent- und Rechtsanwälte Schnekenbühl und Partner mbB
(86) International application number: PCT/JP2016/073082
(87) International publication number: WO 2017/026390

(57) **Abstract**

A sapling growing apparatus (1) includes: a carriage (30) including racks (33) in eight tiers and traveling along a circulation path (20) in indoor space externally shielded from light and externally heat insulated; an LED (71) mounted on the carriage (30) and emitting light to the multiple saplings in a tray (34) on the racks (33); a watering unit (60) arranged in the indoor space and supplying water to the saplings in the tray (34); a water vapor generator (40) and a cold air flow generator (50) that creates given temperature and humidity environment in the indoor space; and an illumination management unit (101) that creates light environment distinguishing between day and night artificially by turning on and off the LED (71). A large number of saplings are grown uniformly on a large scale while being moved in a circular pattern under the artificial growing environment.

## Description

### Technical Field

The present invention relates to a sapling growing apparatus and a sapling growing method for artificially growing vegetable saplings, additionally, saplings of ornamental plants, saplings of herbal plants, and grafted saplings of such plants, for example.

### Background Art

In response to increasing demands in recent years for vegetable saplings, various sapling growing environments have been suggested for supply of vegetable saplings stably in large quantities. According to the description of patent literature 1, for example, saplings to be grown are transplanted into land in a vinyl greenhouse and grown by using an environmental control apparatus including an air conditioner, an illumination unit, an ozone generator, and a controller. The controller is to control a temperature, a humidity, illuminance, a duration of light emission, and an ozone concentration in response to the type of saplings. If lack of sunshine is detected, the controller controls illumination with the illumination unit appropriately to compensate for the lack. Patent literature 2 describes an apparatus in which a frame with multiple racks is placed in a container or a building and plants are grown on each rack. Each rack is provided with a medium base, LEDs for illumination with the three primary colors for plant growing, a unit for ascending and descending the illumination, a beam light source as plant height detecting means, and a light receiver. The ascending and descending unit changes the heights of the LEDs for illumination in such a manner that the LEDs are maintained at constant distances from the heights of plants, thereby realizing stable growing under constant luminance. A growing apparatus suggested by patent literature 3 includes an insertion unit provided in a settled compact case and having multiple holes for insertion of the roots of plants to be grown. This growing apparatus controls environment for growing including a temperature, a humidity, and illumination inside the compact case. This growing apparatus is to grow parts of plants to be grown intensively by supplying negatively-charged tiny water droplets to these parts.

Patent literature 4 describes a growing apparatus in which grafted saplings rooted in a curing facility covered with a light-shielding covering member are grown while being moved in a growing bed area covered with a covering member made from a light-transmitting material. In the growing bed area, a warm water unit is placed under a floor and a watering unit is placed closer to a ceiling. Further, pallets on multiple rails are each placed on the floor so as to be movable by a chain conveyor. A plant growing pot with a large number of recesses and a through hole formed at the bottom is mounted on each pallet. Grafted saplings like cells in each of the recesses in the plant growing pot are supplied with water while being carried.

### Citation List

### Patent Literature

Patent literature 1: Japanese published unexamined patent application No. 2007-169183
Patent literature 2: Japanese published unexamined patent application No. 2013-153691
Patent literature 3: Japanese published unexamined patent application No. 2008-104377
Patent literature 4: Japanese published unexamined patent application No. Hei 9-70228

### Summary of Invention

### Technical Problem

The apparatus described in patent literature 1 is intended for growing achieved by planting the roots of saplings to be grown into the ground and using sunlight (extraneous light). Hence, this apparatus is not to realize growing under artificial growing environment, so that it is subject to a given degree of limitation in terms of uniform growing. Further, the apparatus described in patent literature 2 or 3 is intended to grow plants to be grown under given growing environment by planting the plants into the rack of the frame or the insertion holes in the compact case. This imposes limitation in terms of application to a large-scale growing of growing a large number of plants at one time. Additionally, uniform growing environment is not always provided at some position in the frame or in the compact case. This makes it likely that a growing result will be changed between the positions of grown plants. Patent literature 4 has the configuration of placing saplings to be grown on the pallet and moving the saplings in the house by the chain conveyor. The house is made from a light-transmitting material. Hence, patent literature 4 uses extraneous light for growing and does not realize growing under artificial growing environment, so that it is subject to a given degree of limitation in terms of uniform growing.

The present invention has been made in view of the above-described issues. The present invention provides a sapling growing apparatus and a sapling growing method allowing a large number of saplings to be grown uniformly on a large scale under artificial growing environment while moving the saplings in a circular pattern.

### Solution to Problem

A sapling growing apparatus according to the present invention includes: a carriage including a mounting unit for mounting of multiple saplings thereon and traveling along a circulation path in indoor space externally shielded from light and externally heat insulated; a semiconductor light-emitting element mounted on the carriage and emitting light to the multiple saplings mounted on the mounting unit; a watering unit arranged at a right place in the circulation path and supplying water to the multiple saplings mounted on the mounting unit; a temperature and humidity environment creation unit that creates given temperature and humidity environment in the indoor space; and a controller that creates light environment distinguishing between day and night artificially by turning on and off the semiconductor light-emitting element.

A sapling growing method according to the present invention is for growing multiple saplings mounted on a mounting unit of a carriage traveling along a circulation path in indoor space externally shielded from light and externally heat insulated. In this method, while the carriage circulates continuously along the circulation path until the multiple saplings are grown, light environment distinguishing between day and night is created artificially for the multiple saplings mounted on the mounting unit by turning on and off light emission from a semiconductor light-emitting element mounted on the carriage, water is supplied to the multiple saplings mounted on the mounting unit by a watering unit arranged at a right place in the circulation path, and given temperature and humidity environment is set for the indoor space by a temperature and humidity environment creation unit.

In these inventions, the carriage moves in a circular pattern continuously or intermittently until the multiple saplings mounted on the mounting unit are grown. In the meantime, the light environment distinguishing between day and night is created artificially for each of the saplings by turning on and off light emission from the semiconductor light-emitting element mounted on the carriage. Further, the watering unit supplies water to each of the saplings, and the temperature and humidity environment is set. The indoor space is externally shielded from light and externally heat insulated, thereby providing more uniform growing environment. Further, each of the saplings is moved in the indoor space. Thus, even if growing environment differs between positions in the indoor space, such a difference is absorbed. As a result, even large-scale growing is still allowed to proceed under more uniform environment.

### Advantageous Effects of Invention

The present invention allows a large number of saplings to be grown uniformly on a large scale under artificial growing environment while moving the saplings in a circular pattern.

### Brief Description of Drawings

Fig. 1 is a schematic view showing a relationship of a sapling growing apparatus according to the present invention with an inner building and an outer building.
Fig. 2 is a plan view showing a circulation structure for the sapling growing apparatus according to the present invention.
Fig. 3 explains the circulation structure: Fig. 3(A) shows the configuration of a turning unit; Fig. 3(B) is a bottom view of a carriage; and Fig. 3(C) shows a different embodiment of a wheel part.
Fig. 4(A) is a partial view showing a chain and a sprocket of the circulation structure, and Fig. 4(B) is a partial perspective view of the chain.
Fig. 5(A) is a front view showing arrangement of a structure for setting sapling growing environment, and Fig. 5(B) is a schematic plan view mainly showing a piping system of this structure.
Fig. 6 is a front view showing the configuration of the carriage.
Fig. 7 is an explanatory view of a tray: Fig. 7(A) is a plan view showing the tray arranged on a rack; and Fig. 7(B) is a perspective view of one tray.
Fig. 8 is a configuration view showing functions for control over sapling growing environment.
Fig. 9 shows the configuration of a water receiver: Fig. 9(A) is a perspective view; and Fig. 9(B) is a partial side sectional view.

### Description of Embodiments

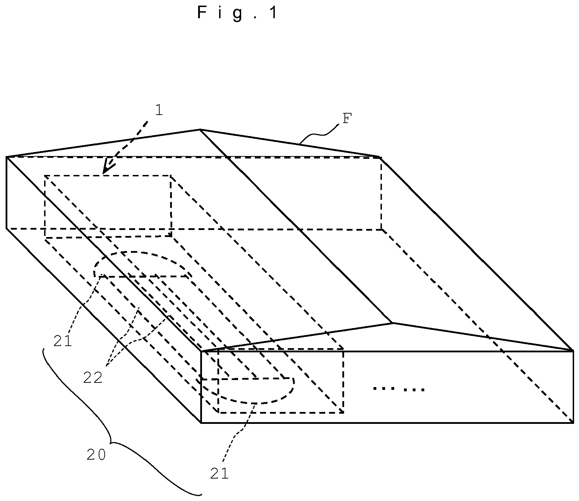

Fig. 1 is a schematic view showing a relationship of a sapling growing apparatus according to the present invention with an inner building and an outer building. For the convenience of making illustration, a circulation path is shortened in the direction of a straight path. The sapling growing apparatus is provided in an inner building 1 with a ceiling and side walls having light-shielding properties and heat-insulating properties. The inner building 1 typically has a shape like a rectangular parallelepiped. One inner building 1 is arranged or multiple inner buildings 1 are juxtaposed in an outer building F. Providing the inner building 1 may be replaced by providing the outer building F with light-shielding properties and heat-insulating properties. Both the inner building 1 and the outer building F may have light-shielding properties and heat-insulating properties. If the inner building 1 has light-shielding properties and heat-insulating properties, the outer building F is not an absolute necessity.

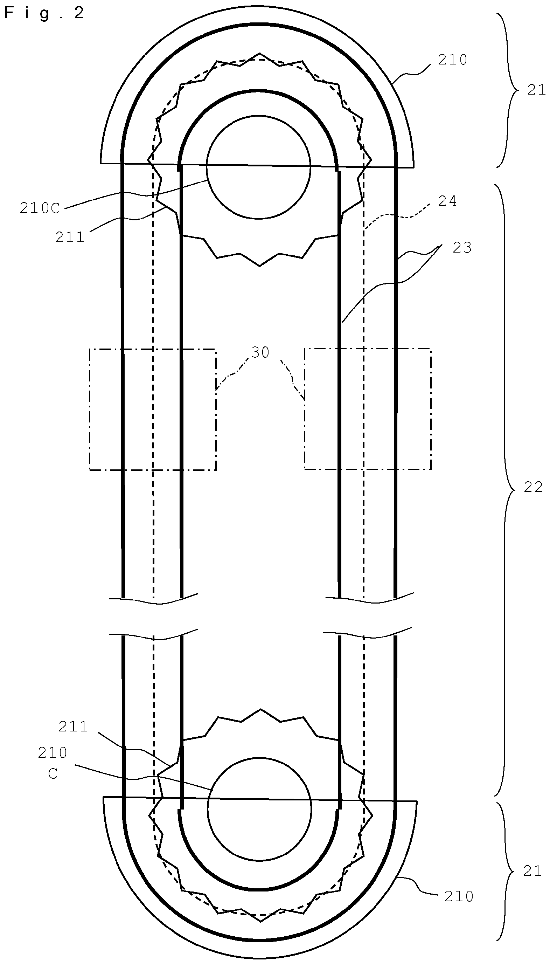

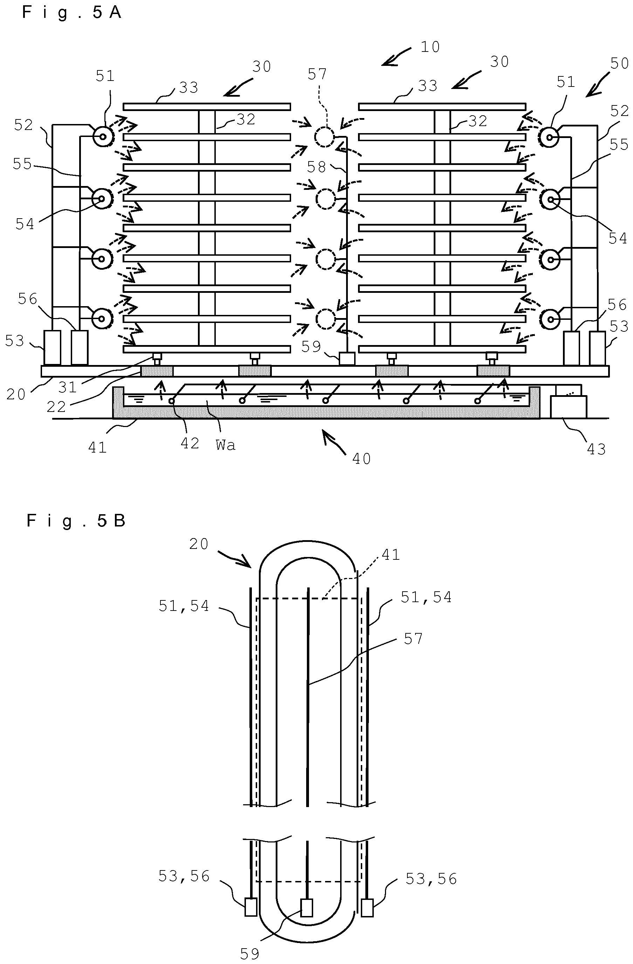

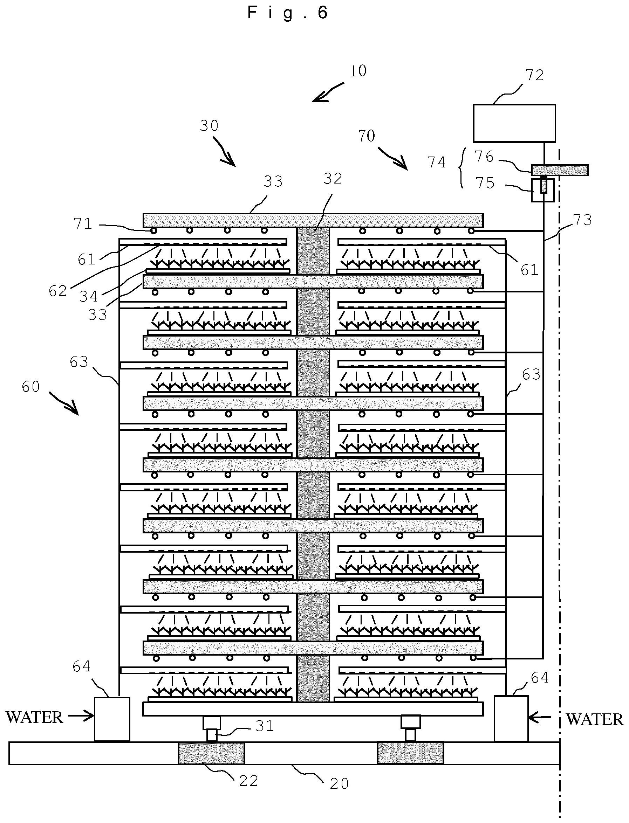

As shown in Figs. 1 and 2, a sapling growing apparatus 10 (see Figs. 5A and Fig. 6) is arranged in the inner building 1. The sapling growing apparatus 10 includes a circulation path 20 as a whole with semicircular turning units 21, 21 for direction reversal arranged at opposite sides of the lengthwise direction, and a reciprocating straight path 22 between the turning units 21. This configuration allows formation of a circulation path achieving efficiency in terms of floor area. Various sizes can be selected for the sapling growing apparatus 10 in response to the type of saplings to be grown or a business scale. For example, the sapling growing apparatus 10 may be from about 30 to about 50 meters in the lengthwise direction.

Two rails 23, 23 are laid parallel to each other on the circulation path 20 of the sapling growing apparatus 10. The rails 23, 23 allow a carriage 30 (shown by virtual lines in Fig. 2) to travel on the rails 23, 23. The carriage 30 will be described later. A chain 24 for moving the carriage 30 is rotatably arranged between the rails 23, 23, thereby forming a chain conveyor. The chain 24 has an endless shape. The chain 24 makes rotary motion while being stretched between sprockets 211, 211 to rotate in a horizontal plane arranged at corresponding bases 210 of the turning units 21, 21. As described later, the carriage 30 is engaged with the chain 24 and moves in a circular pattern on the rails 23, 23 integrally with the chain 24. While not shown in the drawings, the rails 23, 23 are coupled to a track as an entrance for the carriage 30 or a track as an exit for the carriage 30 through a track exchanger at the turning unit 21, for example, thereby facilitating entry and exit of the carriage 30.

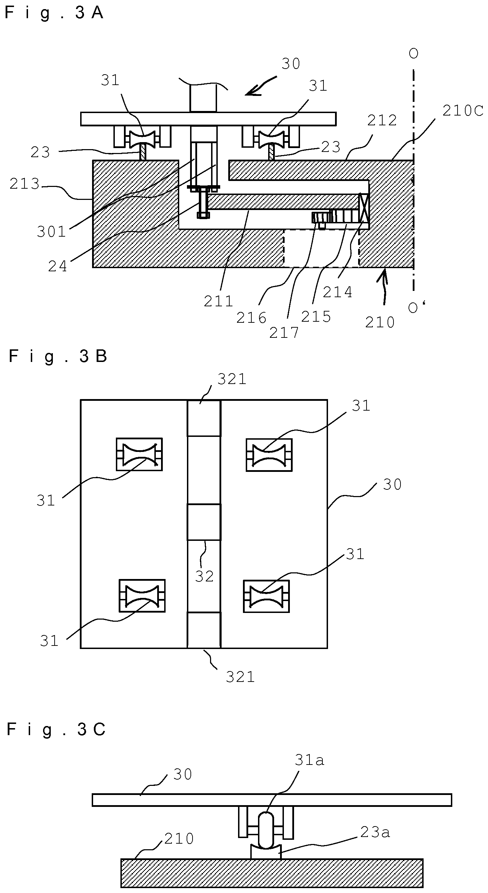

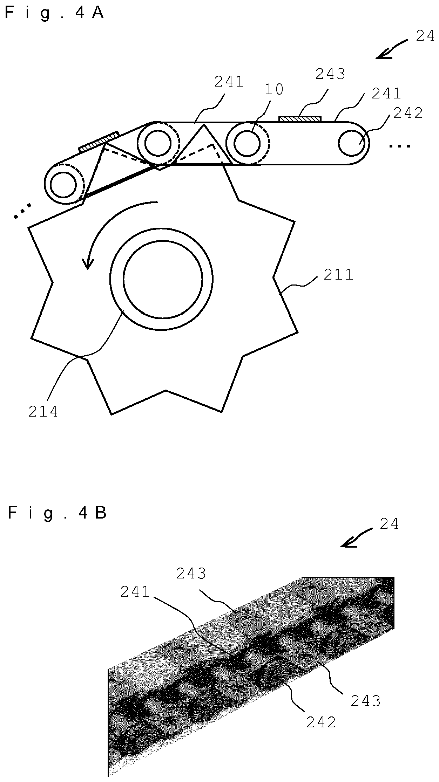

Fig. 3 explains a circulation structure. Fig. 3(A) shows the configuration of the turning unit. Fig. 3(B) is a bottom view of the carriage. Fig. 3(C) shows a different embodiment of a wheel part. Fig. 4(A) is a partial view showing the chain and the sprocket of the circulation structure. Fig. 4(B) is a partial perspective view of the chain. In Fig. 3, the base 210 of the turning unit 21 includes an inner diameter part 212 and an outer diameter part 213 concentric with each other about a center O-O' and separated by a given gap. The gap between the inner diameter part 212 and the outer diameter part 213 is prepared as space for engagement of an engagement part 301 with the chain 24. The engagement part 301 is a wire hanging down like a loop, for example, and provided at a right place of the carriage 30, in this embodiment, at a lower portion of the carriage 30. The engagement part 301 is not required to be provided at each carriage 30. Publicly-known coupling tools for towing coupled to the carriage 30 may be provided in front of and at the back of the carriage 30. A front carriage 30 and a back carriage 30 may be towed with the coupling tool while a given gap is kept between these carriages 30.

The inner diameter part 212 has a shaft 210c on which the sprocket 211 is supported through a bearing 214. The chain 24 is engaged with a tooth part at the outer periphery of the sprocket 211. A gear 215 is attached through the bearing 214 to the shaft 210c of the inner diameter part 212 so as to be concentric with the inner diameter part 212. The gear 215 is integrated with the sprocket 211 and engaged with an output shaft gear 217 of a motor 216. The inner diameter part 212 and the outer diameter part 213 have respective upper surfaces to which the rails 23, 23 laid along the reciprocating straight path 22 are extended to function as rails 23, 23 in semicircular shapes. As shown in Figs. 3(A) and 3(B), wheel parts 31 are exposed at four positions of the lower portion of the carriage 30: a front position, a back position, a right position, and a left position. If the engagement part 301 of the carriage 30 is hooked on and engaged with the chain 24, the motor 216 is rotated. Resultant rotational power is transmitted to the sprocket 211 through the output shaft gear 217 and the gear 215 functioning as a rotational power transmission structure to rotate the sprocket 211. This rotates the chain 24 to cause the carriage 30 to travel along the circulation path 20. Fig. 3(C) shows an embodiment of a wheel part 31a and a rail 23a resulting from changing the shape of the wheel part 31 and that of the rail 23 reversely.

As shown in Fig. 4, a chain having a publicly-known shape is used as the chain 24. The chain 24 has an endless shape formed by coupling pins 242 sequentially on opposite sides of a unit base 241. The chain 24 engages with the tips of teeth of the sprocket 211 to receive rotational power. In this embodiment, as shown in Fig. 2 as a representative, one sprocket 211 is arranged at the turning unit 21. Alternatively, multiple small sprockets may be arranged dispersedly along the semicircle and rotational drive power may be applied to one of these sprockets.

The unit base 241 forming the chain 24 includes a flange part 243 extending to the right and left in a width direction, and engagement with the engagement part 301 is realized at the flange part 243. In addition to the hooking-type engagement part 301, various structures are applicable for engagement between the chain 24 and the carriage 30. For example, the chain 24 and the carriage 30 may be tied with string, latched, mechanically coupled, or fitted to each other. If necessary, the carriage 3 may be provided with a publicly-known disconnection unit for cutting the connection to the chain 24 developed by the present inventor (Japanese published unexamined patent application No. 2013-199367). Such a disconnection unit may include a displacement member arranged at the front side of a carriage so as to protrude partially and to be pressed backward in response to abutting contact with the rear end of a carriage traveling in front of the disconnection unit, and a lever member that cuts engagement with the chain 2 while the displacement member is pressed.

Fig. 5(A) is a front view showing arrangement of a structure for setting sapling growing environment. Fig. 5(B) is a schematic plan view mainly showing a piping system of this structure. The sapling growing environment mainly includes light environment, water environment, and temperature and humidity environment. In Fig. 5, the temperature and humidity environment is provided. The temperature and humidity environment includes a water vapor generator 40 and a cold air flow generator 50. The water vapor generator 40 and the cold air flow generator 50 are placed by using the floor, the side walls, and if necessary, the ceiling of the inner building 1. The water vapor generator 40 and the cold air flow generator 50 are arranged at positions bordering the carriage 30 while the carriage 30 travels along the circulation path 20. In this embodiment, the water vapor generator 40 and the cold air flow generator 50 are arranged at positions responsive to the reciprocating straight path 22. The carriage 30 includes a column 32, and racks 33 supported on the column 32 and arranged in tiers in a height direction. A rack 33 in a bottom tier also functions as a base for the carriage 30. The column 32 stands in an upright posture from the rack 33 in the bottom tier. Further, as shown in Fig. 3(B), the rack 33 in the bottom tier has a bottom surface to which the four wheel parts 31 are attached.

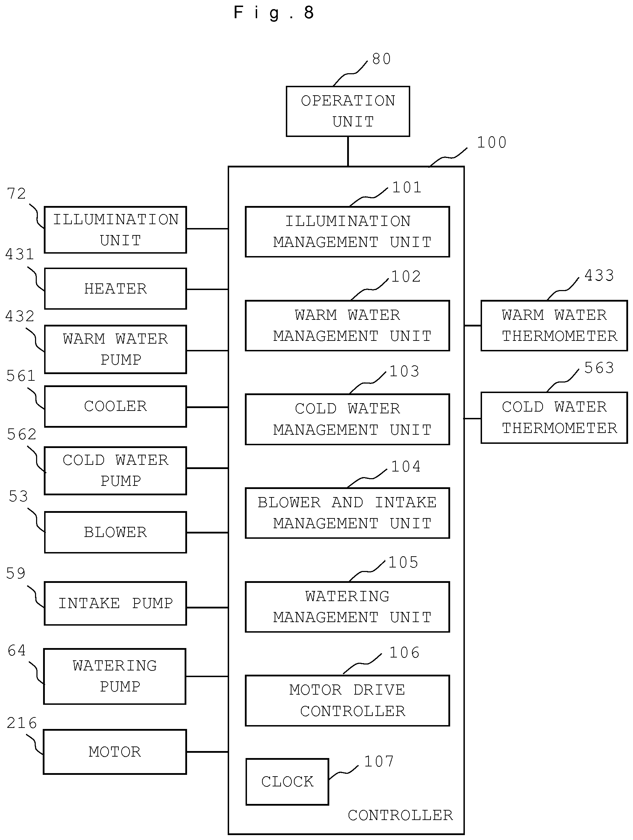

The water vapor generator 40 includes: a water tank 41 of a given depth placed adjacent to the floor including the area of the reciprocating straight path 22 and storing water Wa; pipes 42 laid at appropriate intervals in the water tank 41; and a warm water generator 43 with a heater 431 for generating warm water to circulate through the pipes 42 and a warm water pump 432 (for both the heater 431 and the pump 432, see Fig. 8). The heater 431 of the warm water generator 43 generates warm water at a preset temperature. The warm water pump 432 supplies the generated warm water into the pipes 42. The temperature of water in the water tank 41 is managed by using a warm water thermometer 433 (see Fig. 8) so as to achieve a temperature set under various conditions such as around 40°C, for example. The water temperature may be set appropriately in response to season or the type of saplings. By doing so, while the carriage 30 travels, the carriage 30 is soaked in water vapor atmosphere coming from below.

The cold air flow generator 50 includes blower pipes 51 arranged along the rail 23 corresponding to the outer side of the reciprocating straight path 22, and an intake pipe 57 arranged along the rail 23 corresponding to the inner side of the reciprocating straight path 22. As shown in Fig. 5(A), the blower pipes 51 are arranged in tiers in response to corresponding racks 33 of the carriage 30 while the carriage 30 travels. Specifically, in this embodiment, the blower pipes 51 are arranged to face racks 33 at four positions including a rack 33 in a second tier, a rack 33 in a fourth tier, a rack 33 in a sixth tier, and a rack 33 in an eighth tier viewed from the bottom. The blower pipes 51 have a given diameter and are each provided with a large number of blow holes formed in a surface facing a traveling path for the carriage 30. The blower pipes 51 communicate with a blower pump 53 through a piping system 52.

A cold water pipe 54 of a smaller diameter than the blower pipe 51 is arranged inside the blower pipe 51 to be concentric with the blower pipe 51. Alternatively, the cold water pipe 54 is simply fitted in the blower pipe 51. The cold water pipe 54 communicates with a cold water generator 56 through a pipe 55. The cold water generator 56 includes a cooler 561 for generating cold water, and a cold water pump 652 for supplying the generated cold water to the cold water pipe 54 and causing the supplied cold water to circulate through the cold water pipe 54 (for both the cooler 561 and the cold water pump 652, see Fig. 8). The cooler 561 generates cold water of some degrees centigrade, for example, from 0 to 5°C. Air in the blower pipe 51 is cooled with the cold water circulating through the cold water pipe 54 to be blown as cold air through the blow holes in the surface of the blower pipe 51. Carbon dioxide gas of a given amount may be mixed with the air in the blower pipe 51.

The blower pipe 51 in a bottom tier supplies cold air between the rack 33 in a first tier and the rack 33 in the second tier and between the rack 33 in the second tier and the rack 33 in a third tier. The blower pipe 51 in a second tier supplies cold air between the rack 33 in the third tier and the rack 33 in the fourth tier and between the rack 33 in the fourth tier and the rack 33 in a fifth tier. The blower pipe 51 in a third tier supplies cold air between the rack 33 in the fifth tier and the rack 33 in the sixth tier and between the rack 33 in the sixth tier and the rack 33 in a seventh tier. The blower pipe 51 in a fourth tier supplies cold air between the rack 33 in the seventh tier and the rack 33 in the eighth tier and between the rack 33 in the eighth tier and the rack 33 in a ninth tier (also functioning as a top plate). While water vapor generated in the water tank 41 moves up, mist is generated with the cold air blown in between corresponding racks 33, thereby forming intended humidity and temperature environment. The temperature and humidity environment can be controlled by controlling the temperature of warm water, that of cold water, the flow rate of the warm water, and that of the cold water. A temperature is set in response to the type of saplings. To achieve a temperature similar to that in natural environment, a temperature is generally set to be higher for the daytime than for the nighttime. For example, a temperature is preferably set to about 25°C for the daytime and about 18°C for the nighttime. A humidity may be from 30 to 70%, preferably, from 40 to 60%.

The intake pipe 57 is arranged to face the blower pipe 51 across the carriage 30. The intake pipe 57 communicates with an intake pump 59 through a pipe 58. The intake pipe 57 is responsible for suction of air for the carriages 30 on the opposite sides of the intake pipe 57 traveling along the reciprocating path. To achieve this, the intake pipe 57 has a large number of intake holes formed in the entire surface, or in a right side surface and a left side surface of the pipe. Thus, in response to drive of the intake pump 59, cold air blown from the blower pipes 51 on the opposite sides is sucked in and this sucking motion functions to form an air flow (air blow) positively between an upper rack 33 and a lower rack 33.

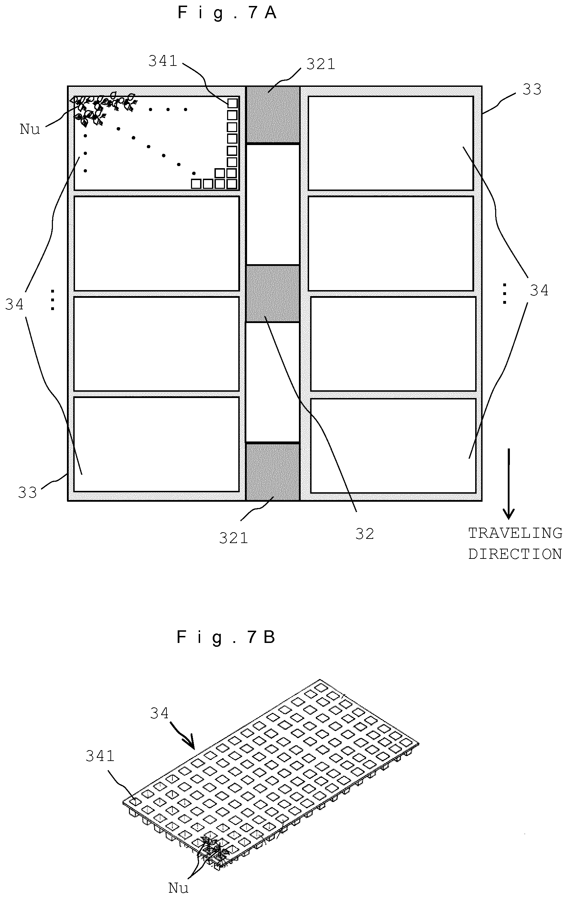

As shown in Fig. 6, the carriage 30 includes the racks 33 in tiers, in this embodiment, in nine tiers. The rack 33 in the bottom tier functions as a base, and the rack 33 in the top tier functions as a top plate. The racks 33 are spaced uniformly between the tiers. The racks 33 from the rack 33 in the second tier to the rack 33 in the eighth tier have the same shape. The rack 33 in the bottom tier is a unit rack with a center area from which the column 32 stands in an upright posture. In terms of strength, reinforcing columns 321 are further provided in upright postures at center positions in an anteroposterior direction of the carriage 30 (see Figs. 3(B) and 7).

As shown in Fig. 7(A), each of the racks 33 from the rack 33 in the second tier to the rack 33 in the eighth tier is supported separately between the right side and the left side across the column 32 and the columns 321. A gap penetrating in the vertical direction is formed between the rack 33 on the right side and the rack 33 on the left side and between the column 32 and the column 321. This gap functions as a pathway for water vapor, air, or water. Each of the racks 33 from the rack 33 in the bottom tier to the rack 33 in the eighth tier holds multiple trays 34 thereon. In this embodiment, eight trays 34 are placed on the rack 33 in total, four on the right side and four on the left side. The tray 34 is a standardized article, for example. In this embodiment, the tray 34 is a plant growing pot with a large number of recesses 341 and a through hole formed at the bottom. In this embodiment, 128 recesses 341 (in eight rows and 16 columns) are formed. There are multiple tray types that are available in response to the type of saplings or the scale of growing. If appropriate, a tray having 162 recesses 341 or 200 recesses 341 may be selected from these tray types. Saplings Nu like cells to be grown are inserted or planted into the recesses 341 together with soil at the roots of the saplings Nu or culture soil. These saplings Nu may be grafted saplings of tomatoes after being rooted and cured, for example.

As an example, in this embodiment, the number of saplings to be grown in one carriage 30 is calculated as follows: 128 × 8 × 8 = 8196. The size of the tray 34 is 54 cm × 28 cm. In consideration of the dimension of the column 32, etc., the extension of the carriage 30 to the right and left and to the front and back is about 1.2 meters square. Assuming that the reciprocating straight path 22 has a scale from about 20 to about 50 m, the number of the carriages 30 substantially tied in a row is nearly from thirty and a few to 100, which is a total number of the carriages 30 on an outward path and the carriages 30 on a return path. Thus, the number of saplings that can be grown along one circulation path 20, which is determined in response to a scale, is from about hundreds of thousands to about million. Saplings are generally grown in a sapling growing period from one to two months while being moved in a circular pattern.

The following describes a structure for watering environment and a structure for light environment for creating sapling growing environment. A watering unit 60 for the watering environment includes watering pipes 61, a watering hole 62, a pipe 63, and a watering pump 64 for feeding water to the watering pipes 61 through the pipe 63. The watering pipes 61 are arranged as a pair at a right place, in this embodiment, at one place in the reciprocating straight path 22 and on the right side and the left side across the rails 23, 23. As shown in Fig. 6, eight watering pipes 61 are prepared in a height direction in such a manner that each of the watering pipes 61 extends from a position lateral to the carriage 30 and passes through between the racks 33 to reach a position near the column 32.

The watering pipe 61 is to pass through a substantially entire area between an upper rack 33 and a lower rack 33 of the carriage 30 relative to the carriage 30 while the carriage 30 travels. This allows each tray 34 to be sprayed with water entirely. A large number of watering holes 62 are formed in the lower surface of the watering pipe 61. By the spray of water through the watering holes 62, water is poured (sprinkled) over the leaves, stems, and roots of the saplings Nu in the tray 34 mounted on the rack 33 directly below these watering holes 62.

Liquid to be fed may merely be water. More preferably, antiseptic liquid or negative ion liquid may be mixed. In this case, a tank not shown in the drawings may be provided upstream from the watering pump 64, for example, and mixed liquid prepared in advance may be stored in this tank. The antiseptic liquid is to protect the saplings Nu from viruses or bacteria. Commercially-available (general-purpose household) antiseptic liquid is used effectively such as ethanol, povidone iodine, or hydrogen peroxide, for example.

An illumination unit 70 is provided for the light environment. The illumination unit 70 uses a semiconductor light-emitting element, typically, a light-emitting diode 71 (LED: light emitting diode) as an illumination light source. Multiple LEDs 71 are arranged dispersedly on the lower surface of each of the racks 33 from the rack 33 in the second tier to the rack 33 in the top tier. The LEDs 71 emit light of substantially uniform illuminance to the upper surface of the tray 34 mounted on the rack 33 directly below these LEDs 71. Illuminance may be set appropriately in response to the type of saplings. Preferable illuminance is from several thousands to several tens of thousands lux. For the LEDs 71, light-emitting elements to emit light of a wavelength for growing suitable for sapling growing are used. Preferably, light-emitting elements of the three types of primary colors including red, blue, and green are used. By doing so, an intended light source of white color is generated. A light-emitting element of white color resulting from mixing of the three colors may be used. Further, intended illuminance may be ensured by adjusting light intensity or the number of light-emitting elements, for example. Using the semiconductor light-emitting elements reduces heat generation to cause no adverse effect on the sapling growing environment.

The LEDs 71 are turned on in response to supply of necessary power from an illumination power supply unit 72 placed at a right place such as a side wall of the inner building 1. The LEDs 71 are provided to the carriage 30 and move integrally with the carriage 30. Thus, a joint unit 74 for electrically connecting a movable side and a stationary side is provided between a power line 73 and the illumination power supply unit 72. The joint unit 74 includes a power collecting part 75 attached to a right position of the carriage 30 to circulate, and a connection target electrode part 76 arranged at a right position on the stationary side such as space close to the ceiling, for example. The connection target electrode part 76 extends along the circulation path 20 and makes sliding contact with a connection electrode of the power collecting part 75. As a result, the LEDs 71 are supplied with power from the illumination power supply unit 72 through the joint unit 74 while the carriage 30 circulates, so that the LEDs 71 can be kept turned on continuously. The illumination power supply unit 72 supplies power during daytime hours to turn on the LEDs 71 and turns off the LEDs 71 during nighttime hours, thereby distinguishing between day and night virtually in the sapling growing space in a light-shielded condition. The joint unit 74 is configured to make sliding contact with the power collecting part 75 of the carriage 30 while the carriage 30 makes outward movement or return movement.

As shown in Fig. 8, the sapling growing apparatus 10 includes a controller 100 that controls sapling growing environment. The controller 100 includes an operation unit 80 for input and setting of various commands such as a temperature condition and a humidity condition, for example, and each of the above-described drive units for operating a corresponding part in response to the setting. The controller 100 further includes the warm water thermometer 433 and a cold water thermometer 563 as sensors. If necessary, a different sensor such as an indoor thermometer or a hygrometer may be provided, for example. As described above, these drive units include the illumination power supply unit 72 for turning on LEDs, the heater 431 for generating warm water, the warm water pump 432 for circulating the warm water, the cooler 561 for generating cold water, the cold water pump 562 for circulating the cold water, the blower pump 53 for circulating air, the intake pump 59 for sucking air, the watering pump 64 for spraying water, and the motor 216 for causing the carriage 30 to travel at a constant speed along the circulation path 20.

The controller 100 may exert sequence control. Alternatively, the controller 100 may be a controller with a computer provided inside that executes a control program to control each unit. The controller 100 reads the control program from a memory unit not shown in the drawings and executes the read control program, thereby functioning as an illumination management unit 101 for changing an illumination condition between day and night, a warm water management unit 102 for generating warm water at a given temperature, a cold water management unit 103 for generating cold water at a given temperature, a blower and intake management unit 104 for controlling blowing motion, intake motion, performance of the blowing motion, and performance of the intake motion, a watering management unit 105 for spray of water, a motor drive controller 106 for driving the motor 216 for causing the carriage 30 to travel, and a clock 107. The illumination management unit 101 and the watering management unit 105 are configured to allow adjustment by manual, for example, of light intensity (time or illumination) and the amount of water to be supplied in response to the growing situation of saplings.

The following describes sapling growing process performed by the controller 100. A large number of carriages 30 holding the trays 34 thereon housing saplings to be grown are introduced onto the rails 23, 23 sequentially and engaged with the chain 24 in turn. With the motor 216 driven thereafter or already driven, the carriages 30 in large numbers start traveling. Then, the LEDs 71 are turned on. Further, the temperature and humidity environment is prepared and watering operation is started, thereby starting the growing process. The carriages 30 travel at a constant speed along the circulation path 20. For example, each of the carriages 30 may make one circuit in one hour. At such a speed, each sapling Nu is watered once in one hour. In consideration of a watering frequency, a traveling speed may be adjusted or water may be supplied at multiple places. To create environment everyday distinguishing between day and night virtually by using temporal information from the clock 107, the LEDs 71 are turned on during daytime hours and turned off during nighttime hours. By doing so, a state more similar to a natural state is created artificially to realize stable growing. For example, if a growing period from one to two months is finished, the carriages 30 are changed or new trays 34 are introduced.

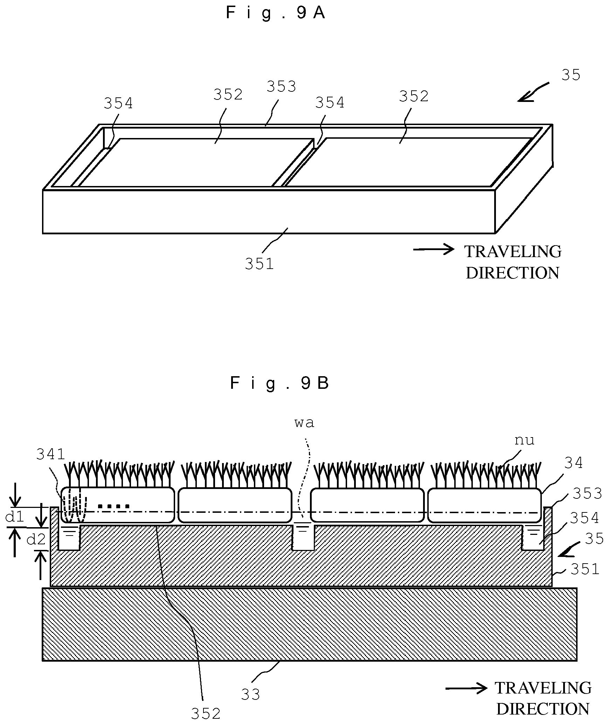

Fig. 9 shows the configuration of a water receiver. Fig. 9(A) is a perspective view showing the appearance. Fig. 9(B) is a partial side sectional view. For the convenience of description of the configuration, a ratio between a dimension in a vertical direction, that in a horizontal direction, and that in a level direction is exaggerated in Figs. 9(A) and (B). A water receiver 35 has a shape like a flat plate and is made from resin, a waterproof foam material, or a metal plate member, for example. The water receiver 35 is placed between each rack 33 and the tray 34 mounted (placed) on each rack 33. In this embodiment, the water receiver 35 includes: a body 351 having an upper surface part 352 of a size for mounting (placement) of four trays 34; an edge part 353 formed around the upper surface part 352 and at a higher level than the upper surface part 352; and a groove part 354 formed between the edge part 353 and the upper surface part 352 and below the upper surface part 352. The water receiver 35 has a given dimension in level (height dimension) of about 50 mm, for example. The edge part 353 is set to be higher in level by a given dimension d1 (from about 10 to about 13 mm, for example) than the upper surface part 352. The groove part 354 extends over the entire periphery of the upper surface of the upper surface part 352. If necessary, the groove part 354 may communicate with a central part or further with a different part. The groove part 354 has a given depth d2 from the upper surface part 352 set to about 10 mm, for example. In this embodiment, the groove part 354 has a width set to 10 mm, like the depth d2. Each dimension is changed appropriately in response to the tray 34 to be used or the type of saplings to be grown, for example. The tray 34 has a level of about 40 mm. Thus, as shown in Fig. 9(B), the bottom of the tray 34 mounted on the water receiver 35 is below the edge part 353 by about 10 mm.

In the above-described configuration, when the tray 34 is brought to the position of the watering pipe 61 by the traveling of the carriage 3, water is supplied from the watering pipe 61. The supplied water permeates into the tray 34. Part of the water moves down gradually to leak onto the upper surface part 352 of the water receiver 35 through the through hole. The provision of the water receiver 35 makes it possible to omit or simplify process of protecting the LEDs 71 and their vicinities on the lower surface of the rack 33 from the water leaking through the through hole in the tray 34 to the rack 33 in a lower position.

Water wa leaking onto the upper surface part 352 of the water receiver 35 is stored in the groove part 354. The level of the stored water is about 10 mm at maximum above the bottom surface of the mounted tray 34. As a result, the stored water wa becomes available as water to be supplied in the tray 1033. This contributes to excess or deficiency of water, even if the watering unit 60 forms a part of the circulation path 20.

In this embodiment, particularly in growing of grafted saplings, work of growing a large number of grafted saplings can be done so as to conform to automated work of forming grafted saplings at higher speeds in recent years. This allows a shift with high efficiency from work of manufacturing the grafted saplings to work of growing the grafted saplings. This further allows stable supply in response to sudden need, for example.
(1) As described above, in this embodiment, unlike sapling growing in a conventional vinyl greenhouse, growing proceeds with artificial light in closed space having lightproof properties and, in this embodiment, surrounded by heat-insulating walls. This achieves stable sapling growing.
(2) Light sources of color such as white not to generate heat such as the LEDs 71 are provided on each rack 33 of the carriage 30. Light energy of about fifteen thousands lux having a wavelength composition sufficient for growing can be applied to saplings arranged close to light-emitting surfaces. This more effectively acts to achieve efficiency in concentrated growing.
(3) A humidity, an air flow, and the concentration of carbon dioxide gas to be introduced as necessary are adjusted in the inner building 1 (indoor space). By doing so, even if saplings are planted into the cells (recesses 341) of the tray 34 more densely, spindly growth (unwanted growth) is unlikely to occur.
(4) The water tank 41 with the routed pipes 42 is placed under the circulation path 20. This can facilitate management of a temperature and a humidity in indoor space at low cost.
(5) Growing in the closed space allows growing of saplings always having a constant quality always within a constant period without being affected by change in season and change in climate. This cannot be achieved by sapling growing in a vinyl greenhouse. Further, by making the carriage 3 movable, saplings can uniformly be placed under growing environment adjusted in light intensity, a temperature, etc. Further, a growing period can be shortened by ten to a few tens of percent.
(6) As saplings are grown in the closed system, manufacturing environment can be adjusted easily for each kind of crop or each item. Further, adjustment for each kind of crop or each item can be made easily by manual.
(7) Efficiency of a light source and that of an air conditioning system are increased, running cost is reduced, and electricity cost as predominating cost for sapling growing is reduced, thereby contributing to cost reduction of a product.
(8) Non-disease saplings without insect damage can be grown without use of agricultural chemicals. Unless a medium or seeds are contaminated with disease or insects, growing of non-disease saplings without insect damage can be completed inside the system as it is.

The present invention is also feasible in the following aspects.
(A) In this embodiment, the chain 24 and the sprocket 211 are used as the conveyor for the carriage 30. Alternatively, a conveyor of a different type is applicable. The chain 24 and the sprocket 211 are engaged under the carriage 30. Alternatively, the chain 24 and the sprocket 211 may be engaged and coupled at a right place on a side surface of the carriage 30 or in a place closer to the ceiling. The shape of the circulation path 20 is not limited to the shape described in this embodiment. A circulation path of a different shape is applicable.
(B) Saplings described in this embodiment are grafted saplings of tomatoes. However, the present invention is not limited to grafted saplings or vegetable saplings but is also applicable in the same manner to growing of various types of saplings, rootstocks, grafts, and various types of herbs and plants. Vegetable saplings may be saplings of tomatoes, eggplants, cucumbers, or watermelons belonging to Cucurbitaceae family.
(C) The tray 34 is not limited to a cell tray type but may also be an under tray type without a cell.
(D) External light shielding and external heat insulation are not required to be complete. The degrees of light-shielding properties and heat-insulating may be of degrees that cause substantially no influence on the artificial sapling growing process according to the present invention.

As described above, the sapling growing apparatus according to the present invention includes: a carriage including a mounting unit for mounting of multiple saplings thereon and traveling along a circulation path in indoor space externally shielded from light and externally heat insulated; a semiconductor light-emitting element mounted on the carriage and emitting light to the multiple saplings mounted on the mounting unit; a watering unit arranged at a right place in the circulation path and supplying water to the multiple saplings mounted on the mounting unit; a temperature and humidity environment creation unit that creates given temperature and humidity environment in the indoor space; and a controller that creates light environment distinguishing between day and night artificially by turning on and off the semiconductor light-emitting element.

In the present invention, the carriage moves in a circular pattern continuously or intermittently until the multiple saplings mounted on the mounting unit are grown. In the meantime, the light environment distinguishing between day and night is created artificially for each of the saplings by turning on and off light emission from the semiconductor light-emitting element mounted on the carriage. Further, the watering unit supplies water to each of the saplings, and the temperature and humidity environment is set. The indoor space is externally shielded from light and externally heat insulated, thereby providing more uniform growing environment. Further, each of the saplings is moved in the indoor space. Thus, even if growing environment differs between positions in the indoor space, such a difference is absorbed. As a result, even large-scale growing is still allowed to proceed under more uniform environment.

The semiconductor light-emitting element is an LED that emits light of a wavelength for growing. Preferably, white light is emitted as light having the wavelength for growing. This allows emission of light similar to natural light to the saplings. The white light to be emitted may be produced by additive color mixing of output light beams from LEDs of the three primary colors.

If the saplings are grafted saplings, rootstocks and grafts can be tied, cured, and grown stably.

Arranging the watering unit at at least one place in the circulation path contributes to weight reduction of the carriage to travel.

By making the watering unit supply water containing antiseptic liquid, the saplings can be protected from viruses or bacteria, for example. This allows growing of the saplings with high efficiency even without use of agricultural chemicals.

The temperature and humidity environment creation unit generates mist and includes a water vapor generator and a cold air flow generator. In this configuration, a given humidity can be obtained and mist can be generated easily under a certain temperature.

The water vapor generator is arranged on a floor of the indoor space. The cold air generator includes a blower part arranged on one side and an intake part arranged on an opposite side across the circulation path. In this configuration, the indoor space can be placed in water vapor atmosphere efficiently. Further, air is blown and sucked across the circulation path. This generates an air flow to obtain uniform humidity environment, and further creates blowing environment.

The mounting unit of the carriage includes racks in tiers. A tray for planting of the multiple saplings is mountable on each of the racks. This configuration allows concentrated growing of saplings on a large scale.

The semiconductor light-emitting element is attached to a ceiling of each of the racks of the carriage. This allows emission of light of the wavelength for growing and of intended light intensity from a position close to the saplings.

The watering unit includes an individual watering part prepared for each of the racks. This configuration allows supply of water reliably to the saplings in the tray mounted on each of the racks.

The sapling growing apparatus includes a water receiver like a flat plate placed between the rack and the tray. The water receiver includes: a body having an upper surface part for mounting of one or two or more of the trays; an edge part formed around the upper surface part and at a higher level than the upper surface part; and a groove part formed between the edge part and the upper surface part and below the upper surface part. In this configuration, water poured from the watering unit arranged at the right place in the circulation path is stored once in the groove part of the water receiver, so that the stored water is used as water to be supplied to the saplings.

The circulation path includes: semicircular turning units provided at opposite ends of the circulation path for pointing the carriage in a different direction; and a reciprocating straight part between the turning units. This configuration provides a sapling apparatus allowing efficient use of a floor (ground area).

### Reference Signs List

F Outer building
1 Inner building
10 Sapling growing apparatus
20 Circulation path
21 Turning unit
22 Reciprocating straight part
30 Carriage
33 Rack (mounting unit)
34 Tray
35 Water receiver
351 Body
352 Upper surface part
353 Edge part
354 Groove part
40 Water vapor generator (temperature and humidity environment creation unit)
50 Cold air flow generator (temperature and humidity environment creation unit)
51 Blower pipe (blower part)
57 Intake pipe (intake part)
60 Watering unit
61 Watering pipe (individual watering part)
70 Illumination unit
71 LED (semiconductor light-emitting element)
100 Controller
Nu Sapling

## Claims

1. A sapling growing apparatus comprising:
a carriage including a mounting unit for mounting of multiple saplings thereon and traveling along a circulation path in indoor space externally shielded from light and externally heat insulated;
a semiconductor light-emitting element mounted on the carriage and emitting light to the multiple saplings mounted on the mounting unit;
a watering unit arranged at a right place in the circulation path and supplying water to the multiple saplings mounted on the mounting unit;
a temperature and humidity environment creation unit that creates given temperature and humidity environment in the indoor space; and
a controller that creates light environment distinguishing between day and night artificially by turning on and off the semiconductor light-emitting element.

2. The sapling growing apparatus according to claim 1, wherein the semiconductor light-emitting element is an LED that emits light of a wavelength for growing.

3. The sapling growing apparatus according to claim 1 or 2, wherein the saplings are grafted saplings.

4. The sapling growing apparatus according to any one of claims 1 to 3, wherein the watering unit is arranged at at least one place in the circulation path.

5. The sapling growing apparatus according to claim 4, wherein the watering unit contains antiseptic liquid.

6. The sapling growing apparatus according to any one of claims 1 to 5, wherein the temperature and humidity environment creation unit generates mist and includes a water vapor generator and a cold air flow generator.

7. The sapling growing apparatus according to claim 6, wherein the water vapor generator is arranged on a floor of the indoor space, and the cold air generator includes a blower part arranged on one side and an intake part arranged on an opposite side across the circulation path.

8. The sapling growing apparatus according to any one of claims 1 to 7, wherein the mounting unit of the carriage includes racks in tiers, and a tray for planting of the multiple saplings is mountable on each of the racks.

9. The sapling growing apparatus according to claim 8, wherein the semiconductor light-emitting element is attached to a ceiling of each of the racks.

10. The sapling growing apparatus according to claim 8 or 9, wherein the watering unit includes an individual watering part prepared for each of the racks.

11. The sapling growing apparatus according to any one of claims 8 to 10, comprising a water receiver like a flat plate placed between the rack and the tray, wherein
the water receiver includes: a body having an upper surface part for mounting of one or two or more of the trays; an edge part formed around the upper surface part and at a higher level than the upper surface part; and a groove part formed between the edge part and the upper surface part and below the upper surface part.

12. The sapling growing apparatus according to any one of claims 1 to 11, wherein the circulation path includes: semicircular turning units provided at opposite ends of the circulation path for pointing the carriage in a different direction; and a reciprocating straight part between the turning units.

13. A sapling growing method for growing multiple saplings mounted on a mounting unit of a carriage traveling along a circulation path in indoor space externally shielded from light and externally heat insulated, wherein
while the carriage circulates continuously along the circulation path until the multiple saplings are grown, light environment distinguishing between day and night is created artificially for the multiple saplings mounted on the mounting unit by turning on and off light emission from a semiconductor light-emitting element mounted on the carriage, water is supplied to the multiple saplings mounted on the mounting unit by a watering unit arranged at a right place in the circulation path, and given temperature and humidity environment is set for the indoor space by a temperature and humidity environment creation unit.
